Europäisches Patentamt

European Patent Office

Office européen des brevets

(19)

(11) Veröffentlichungsnummer: **0 139 778**

**A1**

(12) # EUROPÄISCHE PATENTANMELDUNG

(21) Anmeldenummer: 83110771.9

(22) Anmeldetag: 27.10.83

(51) Int. Cl.⁴: **G 09 B 5/06**
**G 03 B 23/14**

(43) Veröffentlichungstag der Anmeldung:
08.05.85 Patentblatt 85/19

(84) Benannte Vertragsstaaten:
AT BE CH DE FR GB IT LI LU NL SE

(71) Anmelder: Licinvest AG
Hartbertstrasse 9
CH-7002 Chur(CH)

(72) Erfinder: Ackeret, Peter
Allmendstrasse 18
CH-8700 Küsnacht(CH)

(74) Vertreter: Dipl.-Ing. H. Marsch Dipl.-Ing. K. Sparing
Dipl.-Phys.Dr. W.H. Röhl Patentanwälte
Rethelstrasse 123
D-4000 Düsseldorf(DE)

(54) Anordnung zum Betrachten von Bildkarten und koordinierten Aufzeichnen und/oder Abspielen von Toninformationen.

(57) Die Erfindung betrifft eine Anordnung zum Betrachten von Bildkarten und koordiniertem Aufzeichnen oder Wiedergeben von Audioinformationen. Die Bildkarten sind lose in einem Bildwechsler untergebracht, der ein zyklisches Wechseln des jeweils präsentierten Bildes erlaubt, und in Abhängigkeit von dem Bildwechselvorgang wird ein zugeordneter Tonträger in einem mit dem Bildwechsler verbundenen Aufzeichnungs- und Wiedergabegerät aktiviert.

Fig.4

EP 0 139 778 A1

Croydon Printing Company Ltd.

49/51-E

Anordnung zum Betrachten von Bildkarten und
koordinierten Aufzeichnen und/oder Abspielen
von Toninformationen
----------------------------------------------------

Die Erfindung betrifft eine Anordnung zum Betrachten
von Bildkarten und koordinierten Aufzeichnen und/oder Abspielen
von Toninformationen.

Eine Anordnung mit den im Oberbegriff des Patentanspruchs 1 genannten Merkmalen ist in der DE-PS 22 19 865 beschrieben und dargestellt. Bei dieser bekannten Anordnung sind die nacheinander zu präsentierenden Bildinformationen (nachstehend kurz
"Bilder") kettenartig fest miteinander verbunden, und die jeweils
den Bildern zugeordneten Tonaufzeichnungen sind als Tonspuren auf
einer, jeweils einer Anzahl von Bildern gemeinsam zugeordneten
Tonbandmanschette nebeneinander vorgesehen. Bei Fortschaltung der
Bilderkette um ein Bild wird synchron ein Tonkopf um eine Spurbreite
von der zuletzt abgetasteten Spur auf der Manschette auf die nächste Spur geschaltet. Da die Anzahl der auf einer Manschette unterbringbaren Spuren begrenzt ist, wird auch die Zahl der Bilder in
der Kette begrenzt, und jeweils eine so zusammengestellte "Tonbildschau" ist in einem gemeinsamen Gehäuse untergebracht, das in
einen Diapositivprojektor einsetzbar ist.

Diese bekannte Anordnung ist für die vorgegebenen Programme geeignet, bei denen von vornherein feststeht, in welcher Reihenfolge die einzelnen Bilder aufeinanderfolgen, so daß in analogen Reihenfolgen auch die Toninformationen auf den Spuren aufgezeichnet werden.

Ein Amateur erhält von der Kopieranstalt aber Negativ- oder Diapositivstreifen, auf denen die Bilder in ungeordneter Folge einschließlich unbrauchbarer Aufnahmen miteinander verbunden werden. Um eine Vertonung und eine Vorführung mit einer eingangs erwähnten Anordnung vornehmen zu können, müßte er zuerst einmal die Streifen in Einzelbilder zerlegen, in eine gewünschte Ordnung bringen, wieder zu einem Streifen fest zusammenfügen - etwa durch Verkleben - und könnte dann mit der Vertonung beginnen. Stellt sich bei der Vertonung heraus, daß doch eine andere Reihenfolge besser gewesen wäre, muß er erneut schneiden und kleben. Deshalb ist die bekannte Anordnung für den Amateur praktisch nicht brauchbar. Für Fotopositive ist das Aneinanderkleben zu Ketten vollends ungeeignet, so daß für die am weitesten verbreitete Form des Bildträgers, die allein eine unmittelbare Betrachtung ohne Projektor zuläßt, die bekannte Anordnung von vornherein ausscheidet.

Aufgabe der Erfindung ist es, eine Anordnung mit den im Oberbegriff des Patentanspruchs 1 genannten Merkmalen zu schaffen, bei der lose Fotopositive oder allgemein Papierbilder in eine beliebige Reihenfolge geordnet werden können, ohne sie jedoch miteinander zu verbinden, wonach sie nacheinander vertont werden können und bei Betrachtung der Bilder der zu jedem Bild aufgezeichnete Ton wieder abspielbar ist, ohne daß der Zuordnung von Bild und Ton noch Aufmerksamkeit geschenkt zu werden braucht.

Die Lösung dieser Aufgabe ergibt sich durch die im kennzeichnenden Teil des Patentanspruchs 1 genannten Merkmale.

Wenn demgemäß die gewünschte Reihenfolge der losen Bilder einmal hergestellt ist, werden die Bilder in das Magazin eingefüllt. Bei Betätigung des Wechselschiebers wird das jeweils zur Betrachtung präsentierte Bild gegen ein anderes aus dem Stapel ausgewechselt, wobei zwar alle Bilder nacheinander betrachtet werden können, aber die

0139778

Reihenfolge aufrechterhalten bleibt, da die Umschichtung des Stapels zyklisch erfolgt. Will man aber an der Reihenfolge doch etwas ändern, so ist dies gleichwohl möglich, da die Bilder ja lose bleiben. Die prinzipielle Bauweise solcher Wechselmagazine ist bekannt.

In dem Magazin ist auch der Tonträger untergebracht, beispielsweise in Form einer Magnetbandmanschette. Die Zahl der Tonspuren auf dem Träger ist gleich der maximal in dem Magazin unterbringbaren Bilderzahl, und bei jeder Wechselschieberbewegung wird sowohl ein Bild gewechselt als auch eine neue Tonspur gewählt, die dann je nach Bauart der Anordnung ein- oder mehrmals abspielbar ist. Die Synchronisierung oder, genauer gesagt, die Zuordnung von zusammengehöriger Bild- und Tonaufzeichnung erfolgt ausschließlich durch die Betätigung des Wechselschiebers.

Es sei noch angemerkt, daß auch Systeme zum Vertonen von Papierbildern bekannt sind (DE-OS 25 07 269). Bei diesen wird aber ein Tonträger unmittelbar mit dem betreffenden Bild verbunden, was, wenn es rationell geschehen soll, bereits in der Kopieranstalt erfolgen müßte, so daß die dort installierten Anlagen geändert oder ergänzt werden müßten. Ferner ist die Tonspeicherkapazität durch die Tonträgerabmessungen begrenzt, die einer Abmessung des Bildes gleich oder kleiner sein werden. Da schließlich das Bild zur Betrachtung stillstehen muß, erfolgt die für Tonaufzeichnung und -wiedergabe erforderliche Relativbewegung von Tonspur und Tonkopf durch Linearbewegung des Tonkopfes, was zu komplizierten Apparaten führt.

Das Magazin mit Wechselschieber, das zu der erfindungsgemäßen Anordnung gehört, enthält den Tonträger und wird, entweder leer direkt dem Verbraucher oder mit frisch kopierten Abzügen gleich von der Kopieranstalt ausgeliefert. An den Bildern selbst brauchen keinerlei Manipulationen vorgenommen zu werden, so daß auch bisher "stumme" Bilder aus Archivbeständen vertont werden können.

Im Prinzip ist es für das Funktionieren der Anordnung gemäß der Erfindung unerheblich, wo in dem Magazin der Bilderstapel und der Tonträger untergebracht sind. Die konstruktive Lösung wird jedoch vereinfacht, wenn der Stapel über dem Tonträger angeordnet wird, und wenn die Außenabmessungen des Magazins hinsichtlich Länge und Breite durch die Bildabmessungen und in der Tiefe durch die Dicke des Stapels und den für den Tonträger benötigten Platz festgelegt werden.

Das Aufzeichnungs- und Wiedergabegerät kann in das Magazin selbst vollständig eingebaut sein, teilweise in das Magazin eingebaut sein und mit einem äußeren Teil verbunden sein, oder aber alle zu dem Aufzeichnungs- und Wiedergabevorgang benötigten Teile außer dem Tonträger selbst können in einem äußeren Gerät untergebracht sein, mit dem das Magazin durch Einschieben, Aufstecken oder in anderer Weise kuppelbar ist.

Für die Ausbildung des Tonträgers gibt es unter Verwendung aller Tonaufzeichnungsverfahren verschiedene Möglichkeiten. Der Tonträger kann als Platte oder als Streifen unmittelbar im Magazin befestigt sein. In diesem Falle muß ein Abtastsystem, beispielsweise ein Tonkopf, relativ zu der ortsfesten Platte oder dem ortsfesten Streifen sowohl in Abtastrichtung als auch in Spurwechselrichtung beweglich sein, was einen relativ großen Platz für die Bewegung des Abtastsystems bedingt. Wenn das Abtastsystem außerhalb des Magazins in dem Aufzeichnungs- und Wiedergabegerät angeordnet ist, hat dann das Magazin eine relativ große Öffnung, die wieder für den Schutz des Tonträgers nach Entnehmen des Magazins aus dem Gerät durch einen Deckel verschlossen wird.

Man kann auch umlaufende Tonträger vorsehen in Form eines Bandes, einer Walze, einer Scheibe oder einer Manschette. Durch den Umlauf des Tonträgers wird entweder die Relativbewegung zwischen Abtastsystem und Tonträger für Aufzeichnung und Wiedergabe oder aber für den Spurwechsel herbeigeführt. Bei Umlauf in Aufzeichnungs- und Wiedergaberichtung kann man eine Tonaufzeichnung endlos abspielen. In jedem Fall muß das Anwählen der neuen Spur zusammen mit dem Bildwechsel erfolgen. Dies erfolgt beispielsweise durch mechanische Kopplung des Schiebers mit einem Spurwechselmechanismus derart, daß bei der Hin- und Herbewegung des Wechselschiebers die Spur um eine Spurbreite weitergeschaltet wird.

Damit der Benutzer flexibel ist in der Festlegung der Zahl von Bildern, die er in einem Magazin zusammenfassen und vertonen möchte, ist vorzugsweise der Spurwechselmechanismus so aus-

- 4 -

gelegt, daß die Rückstellung auf die erste Spur ebenfalls durch die Betätigung des Wechselschiebers an einer wählbaren Position erfolgt, die ihrerseits eingestellt wird, je nach der Zahl der im Magazin befindlichen Bilder. Es ist sowohl möglich, den Spurwechsel dadurch zu bewirken, daß das Abtastsystem relativ zu einem Tonträger von Spur zu Spur versetzt wird, als auch dadurch, daß der Tonträger selbst relativ zu dem feststehenden Abtastsystem um eine Spurbreite versetzt wird. Dies ist auch dann möglich, wenn der Tonträger selbst umlaufend ausgebildet ist. Beispielsweise kann bei einer Manschette als Tonträger die Anordnung der Spuren nebeneinander quer zur Umlaufrichtung vorgesehen sein und der Tonkopf wird spurweise relativ zur Manschettenbreite versetzt. Eine Manschette kann aber auch so angeordnet werden, daß sie quer zu ihrer Umlaufrichtung vom Tonkopf abgetastet wird und jeweils schrittweise weitergedreht wird, wenn ein Spurwechsel erfolgen sollte.

Wenn ein Teil oder alle Aufzeichnungs- und Wiedergabekomponenten für die Toninformation in einem mit dem Magazin kuppelbaren Gerät untergebracht sind, weist das Magazin vorteilhafterweise eine Öffnung auf, durch die der Zugang zur Tonspur für Aufzeichnung oder Wiedergabe erfolgt. Aus Gründen der Aufrechterhaltung des Staubschutzes und auch aus ästhetischen Gründen, wird eine solche Öffnung, wenn das Magazin von dem Gerät entkuppelt wird, wieder verschlossen, z.B. durch einen Klapp- oder Schiebedeckel. Konstruktiv ist dafür zu sorgen, daß nicht nur die Ausfluchtung des Tonkopfes mit der jeweiligen Tonspur durch den Kopplungsvorgang sichergestellt sein muß, wobei vorteilhafterweise einrastende Verriegelungen oder dergleichen vorgesehen werden, sondern man muß auch dafür sorgen, daß das Magazin einerseits, aber auch das Gerät selbst andererseits so ausgebildet sein müssen, daß auch bei mit dem Gerät gekuppelten Magazinen die ganze Anordnung funktionsfähig ist, und zwar auch für den Bildwechsel, d.h. daß der Wechselschieber frei beweglich bleibt und auch frei erfaßt werden kann.

Es ist auch möglich, insbesondere für die Wiedergabe von Bild- und Toninformationen für ein größeres Publikum, unmittelbar aus den Magazinen heraus die Bilder zu projizieren und die zugehörigen Toninformationen abzuspielen, wofür das Tonwiedergabegerät zugleich als Projektionsapparat für die Bildinformation ausgebildet ist. Wenn für das Aufzeichnungs- und Wiedergabegerät größere Abmessungen zulässig sind, beispielsweise bei der letztgenannten Kombination mit einer Bildprojektionsoptik, kann man auch einen motorischen Antrieb für den Wechselschieber vorsehen, welcher Antrieb durch Tastendruck betätigbar ist. Mit der Wechselbewegung erfolgt dann immer auch der Übergang auf die dem projizierten Bild zugeordnete Tonspur. Bei einem motorischen Antrieb des Bildwechselschiebers kann auf der jeweiligen Tonaufzeichnungsspur, wenn etwa das Ende der zu einem projizierten Bild gehörigen Tonaufzeichnung erreicht ist, ein Steuersignal in einem unhörbaren Frequenzbereich aufgezeichnet sein, das dann die Bildwechselbewegung auslöst, um z.B. die vollautomatische und fortlaufende Vorführung einer Ton- und Bildschau zu ermöglichen. Dies ist beispielsweise zweckmäßig bei Vorträgen oder Werbeveranstaltungen.

Die folgenden Erläuterungen beziehen sich vor allem auf die Magnet-Ton-Aufzeichnung, und die dort gebräuchlichen Ausdrücke werden verwendet, doch versteht es sich, daß die analogen Betrachtungen auch für andere Aufzeichnungs- und Wiedergabeverfahren in jeweils analoger Weise gelten, beispielsweise für Licht-Ton-Aufzeichnungen.

Beim Magnet-Ton-Verfahren ist für die Aufzeichnung und Wiedergabe eine Relativbewegung zwischen dem Tonträger und dem Tonkopf erforderlich, wobei der Tonkopf mit einer gewissen Kraft an der Magnetspur anliegen soll, und für den Übergang von Spur zu Spur ist eine Relativbewegung quer zu der Aufzeichnungs- und Wiedergabebewegung erforderlich. Das Anliegen während des Aufzeichnungs- oder Wiedergabevorgangs soll aber vorteilhafterweise dann unterbrochen werden, wenn ein Spurwechsel erfolgt. Dies kann ebenfalls von der Schieberbetätigung gesteuert oder bewirkt werden.

Die gleichförmige Aufzeichnungs- bzw. Wiedergaberelativbewegung zwischen Tonträger und Tonkopf und die Rückführung des Tonkopfes in seine Ausgangsstellung, die erforderlich ist, wenn die Spur nicht eine in sich geschlossene Schleife bildet, können in konventioneller Weise elektromotorisch vorgenommen werden. Es ist aber auch möglich, die Rückstellbewegung des Tonkopfes ebenfalls von der Wechselschieberbetätigung des Magazins zu steuern oder direkt zu bewirken. Eine besonders preisgünstige und sehr kompakt herstellbare Ausführungsform ergibt sich, wenn durch die Wechselbewegung des Wechselschiebers ein mechanischer Energiespender, z.B. eine Feder, aufgeladen wird, der dann die Vorschubenergie für die gleichförmige Abtastbewegung des Tonkopfes liefert und gegebenenfalls auch für seine Rückstellung in die Ausgangsposition und/oder den Spurwechsel. Aus anderen Gebieten der Technik sind Hemmwerke bekannt, mittels denen die Energieabgabe eines solchen aufgeladenen Energiespeichers gleichmäßig genug für eine heutigen Qualitätsanforderungen genügende Gleichförmigkeit möglich. Die bei der Wechselbewegung aufbringbare und in dem mechanischen Speicher speicherbare Energie wird im allgemeinen für mehrere Abtast- und Rückstellvorgänge ausreichen. Andernfalls kann man durch Betätigung des Wechselschiebers den Energiespeicher nachladen, wobei jedoch die Wechselbewegung nicht vollständig durchgeführt wird, und damit auch kein Bildwechsel erfolgt. Sowohl bei einem motorischen Tonkopf- bzw. Tonträgerantrieb als auch bei einem Antrieb von einem mechanischen Energiespeicher her kann man unterschiedliche Abtastgeschwindigkeiten vorsehen, um die Aufzeichnungs- und Wiedergabedauer bei gegebener Länge der Magnetaufzeichnungsspur zu verändern, und man kann im Magazin oder auch im Aufzeichnungs- und Wiedergabegerät eine Anzeige mit Skale für die jeweils noch zur Verfügung stehende Speicherkapazität der Tonaufzeichnung vorsehen. Wenn der zu bewegende Tonkopf nicht im Magazin selbst, sondern in einem anzukuppelnden Aufzeichnungs- und Wiedergabegerät enthalten ist, kann man gleichwohl einen durch die Wechselschieberbetätigung aufladbaren mechanischen Energiespeicher verwenden, der dann vorzugsweise, aber nicht unbedingt zwingend, in dem Gerät untergebracht ist und mechanisch mit dem Wechselschieber gekoppelt ist.

Wie oben angedeutet, kann man auch die für den Spurwechsel erforderliche Bewegungsenergie einem durch die Wechselschieberbetätigung aufgeladenen mechanischen Energiespeicher entnehmen. Ein solcher mechanischer Energiespeicher macht die Anordnung nicht nur

- 7 -

preisgünstig, sondern vergrößert auch entsprechend die Lebensdauer von für die elektronische Verstärkung benötigten Batterien, die nicht mehr die Energie für die Tonkopfbewegung und/oder die Spurwechselbewegung zu liefern brauchen.

Zwei Ausführungsformen der Anordnung gemäß der Erfindung werden nachstehend unter Bezugnahme auf die beigefügten Zeichnungen im einzelnen erläutert.

Fig. 1 bis 6 beziehen sich auf ein erstes Ausführungsbeispiel und Fig. 7 bis 10 auf ein zweites.

Fig. 1   zeigt ein Magazin der Anordnung im Schnitt parallel zur Bewegung eines Tonkopfes und parallel zur Bewegungsrichtung des Wechselschiebers,

Fig. 2   zeigt eine Draufsicht auf den Tonträgerspeicher, eingebaut nahe dem Boden des Magazins,

Fig. 3   ist eine Teilschnittdarstellung ähnlich Fig. 2, jedoch in einer anderen Ebene,

Fig. 4   ist ein Schnitt quer durch das Magazin,

Fig. 5   ist eine Frontansicht des geschlossenen Magazins,

Fig. 6   zeigt perspektivisch den Tonkopf zur Verwendung in dem Magazin nach Fig. 1 bis 5,

Fig. 7   zeigt in teilgeschnittener Seitenansicht eine zweite Ausführungsform der Anordnung nach der Erfindung,

Fig. 8   zeigt halbschematisch den Vorgang der Verbindung bei dieser zweiten Ausführungsform in ähnlicher Darstellung wie Fig. 7, und

Fig. 9 und 10   sind Schnitte in Ebenen parallel zu der der Fig. 8.

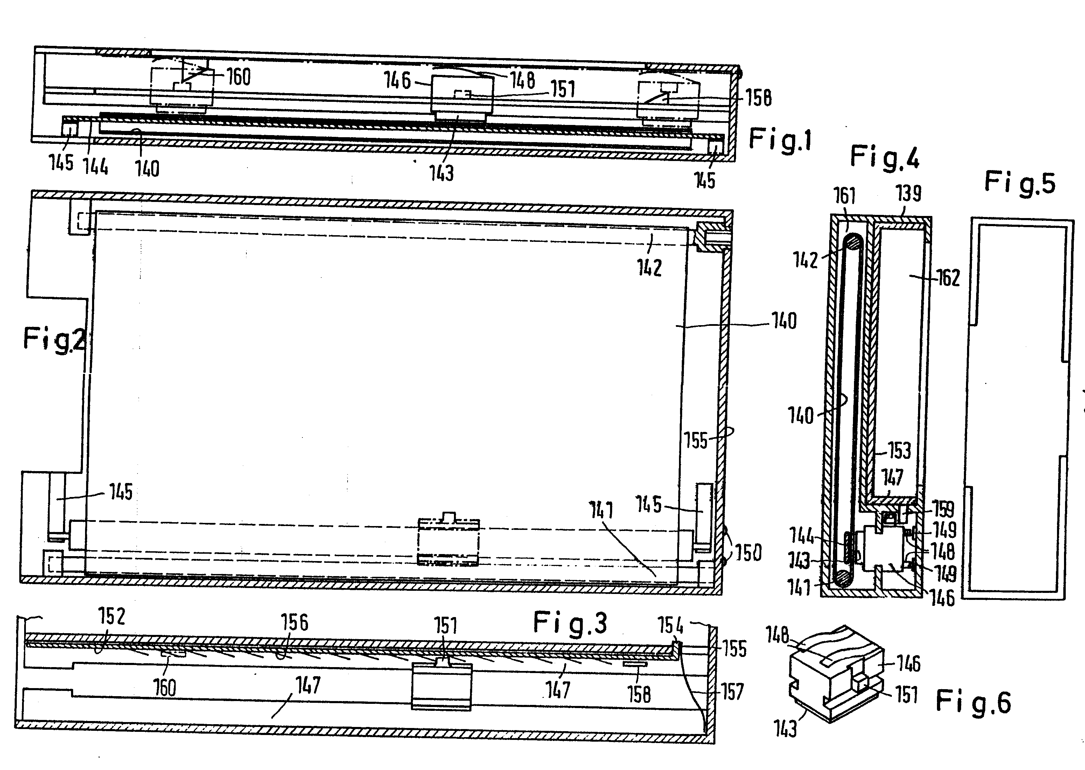

Bei der Ausführungsform nach Fig. 1 bis 6 weist das Magazin einen für alle eingelegten Karten gemeinsamen Tonspeicher oder Tonträger auf, und ein Tonkopf zur Abtastung des Tonträgers ist in das Magazin eingebaut.

In Fig. 4 erkennt man das Magazin 139 in einem Schnitt quer zur Schmalseite des im wesentlichen rechteckigen Magazins. Im Kassettenboden 161 ist eine in sich geschlossene Tonträgermanschette 140 drehbar über Umlenkwalzen 141 und 142 gelegt; die Walze 142 wird von einem in einem (nicht dargestellten) Tonwieder-gabeteil aus motorisch angetrieben.

Unter einem Tonkopf 143 liegt eine Andruckplatte 144, die von zwei Blattfedern 145 auf den Tonkopf zu unter Vorspannung stehen, so daß der Tonkopf in Wirkverbindung mit der Manschette 140 treten kann.

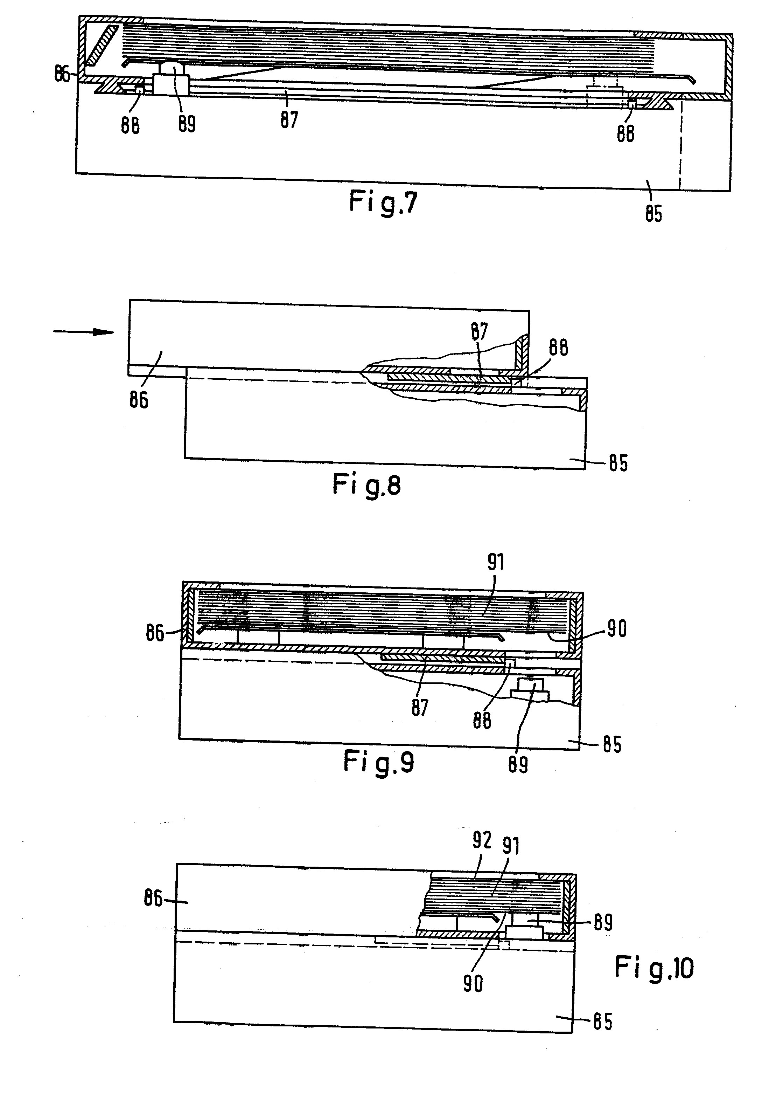

Der Tonkopf 143 ist in einem Kunststoffgehäuse 146 (siehe auch Fig. 6) gehalten. Zwei Rippen 147 dienen seiner Führung in der Abtastrichtung. Zwei Kontaktfedern 148 leiten die elektrischen Signale auf zwei Stromschienen 149 und von dort auf zwei Außenkontakte 150, die wie der Antrieb mit dem nicht dargestellten Aufzeichnungs- und Wiedergabegerät verbunden sind.

Man erkennt in Fig. 6 den Aufbau im einzelnen des Kunststoffgehäuses 146 für den Tonkopf 143. Das Gehäuse weist die beiden Kontaktfedern 148 sowie einen in Vertikalrichtung (in der Zeichnung) beweglichen Mitnehmernocken 151 auf. Dieser Nocken hat zwei Aufgaben: Er dient in Wirkverbindung mit einem Transportrechen 152 für das Versetzen des Tonkopfes auf eine neue Spur beim Bildwechsel und andererseits der Rückführung des Tonkopfes mit seinem Gehäuse in die Ausgangsstellung, wenn die betreffende Bildfolge, die im Magazin gespeichert ist, einmal durchgelaufen ist.

Fig. 3 läßt die Arbeitsweise des Transportrechens 152 erkennen. Bei jedem Rückhub des Wechselschiebers 153 in das Magazingehäuse hinein läuft der Schieber 153 auf die Nase 154 des Transportrechens 152 auf und stößt diesen unabhängig von der Stellung, die er vorher eingenommen hatte, wieder in eine Ausgangsposition im Maga-zingehäuse 155 hinein. Das Kunststoffgehäuse 146 für den Tonkopf 143 wird dabei um den gleichen Weg von an dem Transportrechen angeordneten Lamellen 156 mitgenommen, die einzeln nach Art von Blattfedern ausweichen können. Beim Wiederherausziehen des Wechselschiebers 153 kann der Rechen 152 ausweichen, wobei die Vorspannfedern 157 nachgeben. Die Lamelle, die unmittelbar vor dem Nocken 151 liegt, federt ebenfalls zurück, weil sie durch den Nocken verdrängt wird. Diese Lamelle übernimmt dann neu die aktive Funktion, usw.

Fig. 1 läßt die Steuerung des Nockens 151 für die Tonkopfführung erkennen. Durch den Keil 158 wird der Nocken 151 bei Erreichen seiner Endposition nach oben geschoben, so daß er vom Zahn 159 des Wechselschiebers 153 erfaßt und mit nach oben gezogen werden kann. Damit er von dieser Ausgangslage ausgehend erneut mit dem Transportrechen 152 zusammenwirken kann, drückt der Keil 160 den Nocken 151 wieder nach unten.

Fig. 2 läßt die im Kassettenboden 161 eingebauten Komponenten, insbesondere die Manschette 140, erkennen, während Fig. 5 die Frontansicht des Schiebers 153 zeigt, dessen Wandung bei geschlossenem Zustand das Kartenaufbewahrungsabteil 162 und den Tonmanschettenteil des Magazins abdeckt.

Wenn das Magazin nicht ganz gefüllt ist, d.h. weniger Karten enthält als dem Tonkopf 143 Tonspuren auf der Manschette zugeordnet sind, so kann man den Keil 158 von außen her verstellbar ausbilden, so daß der Tonkopf nach Abtastung der der letzten Karte des Kartenstapels zugeordneten Tonspur auf der Manschette sofort wieder in die Ausgangsposition zurück zur Abtastung der Spur für die erste Karte transportiert wird. Der Nocken 151 wird dabei an einer weiter innen liegenden Position nach oben geschoben und dann vom Zahn 159 des Wechselschiebers erfaßt.

Die Fig. 7 bis 10 zeigen die Anordnung in einer zweiten Ausführungsform. Bei dieser Ausführungsform wird die Unterseite eines Magazins 86 mit einem Aufzeichnungs- und Wiedergabegerät 85 durch Aufschieben gekuppelt. Der gekuppelte Zustand ist in Fig. 7 in Seitenansicht, teilweise im Längsschnitt, dargestellt.

Fig. 8 läßt schematisch den Vorgang bei der Kupplung erkennen. Auf der Unterseite des Magazins 86 ist ein verschieblicher Deckel 87 vorgesehen, der beim Aufschieben des Magazins auf eine Schiebeführung des Geräts 85 auf einen Anschlagnocken 88 trifft. Bei Fortsetzung des Aufschiebevorgangs nehmen die beiden Teile schließlich die Position gemäß Fig. 9 ein, wobei der Deckel 87, weil er an dem Nocken 88 ansteht, sich relativ zu dem Magazin verschiebt und damit eine Öffnung an der Unterseite des Magazins freimacht.

Der Tonkopf 89 des Aufzeichnungs- und Wiedergabegerätes kann nun durch (nicht dargestellte) Mittel aktiviert werden, d.h. er wird durch die Öffnung bis in das Magazin hineingehoben, bis er an der Unterseite der untersten Karte 90 des Stapels 91 an derjenigen Stelle federnd anliegt, wo die Karten eine Tonspur aufweisen. Danach kann der Tonkopf senkrecht zur Zeichnungsebene in an sich bekannter Weise durch gleichförmige Bewegung relativ zu dieser Tonspur bewegt werden, so daß die Aufzeichnung bzw. die Wiedergabe etwa nach dem Magnet-Ton-Verfahren erfolgen kann.

Da der Tonkopf 89 hier die Tonspur auf der untersten Karte des Stapels abtastet, während dem Betrachter die oberste Karte des Stapels durch das Sichtfenster des Magazins präsentiert wird, ist die Zuordnung von Bildinformation und Toninformation solange gewährleistet, solange die Reihenfolge der Karten im Magazin unverändert bleibt und auch keine Karte entnommen oder hinzugefügt wird. Da durch die Wechselschieberbetätigung die Reihenfolge der Karten im Magazin nicht geändert wird, sondern die Karten nur zyklisch umgeschichtet werden, bleibt die Zuordnung von dem Wechselvorgang unberührt.

Ansprüche

1)    Anordnung zum Betrachten von Bildkarten und zum koordinierten Aufzeichnen und/oder Abspielen von Toninformationen, die in einem von den Karten getrennten Tonträger gespeichert oder speicherbar sind, wobei die Bildkarten und der Tonträger in einem gemeinsamen Gehäuse untergebracht sind und der Tonträger eine der Maximalzahl von Bildkarten entsprechende Zahl von Tonspeichern aufweist, dadurch gekennzeichnet, daß das Gehäuse als ein Kartenwechselmagazin ausgebildet ist, in dem die Bildkarten lose übereinander gestapelt sind und das einen parallel zu einem Sichtfenster aus dem Magazin heraus- und wieder einschiebbaren Schieber aufweist, mittels dem an dem Sichtfenster präsentierte Bildkarten zyklisch auswechselbar sind, und daß der der jeweils präsentierten Bildkarte zugeordnete Tonträgerspeicher unter Steuerung durch die Wechselschieberbetätigung für die Tonaufzeichnung oder -wiedergabe mittels eines ganz oder teilweise in das Magazin eingebauten bzw. an dieses ankoppelbaren Aufzeichnungs- und Wiedergabegerätes mittelbar oder unmittelbar anwählbar ist.

2)    Anordnung nach Anspruch 1, dadurch gekennzeichnet, daß für die Aufzeichnung der Tonträgerspeicher nach dem Anwählen für permanente oder korrigierbare Aufzeichnung und für die Wiedergabe für ein- oder mehrmaliges Abtasten mit dem Gerät verbunden ist.

3) Anordnung nach Anspruch 1 oder 2, dadurch gekennzeichnet, daß der Kartenstapel in dem Magazin über dem Tonträger angeordnet ist, wobei die Außenabmessungen des Magazins hinsichtlich Länge und Breite durch die entsprechenden Abmessungen der Karten und die Tiefe durch die Zahl der im Stapel enthaltenen Karten, zuzüglich des für den Tonträger benötigten Platzes, festgelegt sind.

4) Anordnung nach einem oder mehreren der vorangehenden Ansprüche, dadurch gekennzeichnet, daß alle Komponenten des Aufzeichnungs- und Wiedergabegerätes vollständig in das Magazin eingebaut sind.

5) Anordnung nach einem der Ansprüche 1 bis 3, dadurch gekennzeichnet, daß ein Teil der Komponenten des Aufzeichnungs- und Wiedergabegeräts im Magazin, die übrigen Komponenten in einem Zusatzteil eingebaut sind.

6) Anordnung nach einem der Ansprüche 1 bis 3, dadurch gekennzeichnet, daß alle Komponenten des Aufzeichnungs- und Wiedergabegerätes in einem Zusatzteil eingebaut sind.

7) Anordnung nach einem der Ansprüche 5 oder 6, dadurch gekennzeichnet, daß das Magazin auswechselbar mit dem Zusatzteil gekuppelt ist.

8) Anordnung nach Anspruch 7, dadurch gekennzeichnet, daß das Zusatzteil für die Kupplung mit Magazinen unterschiedlicher Größe ausgebildet ist.

9) Anordnung nach Anspruch 8, dadurch gekennzeichnet, daß die räumliche Zuordnung des Tonträgers im Magazin zu den Komponenten des Aufzeichnungs- und Wiedergabegerätes, die mit ihm in Wirkverbindung zu bringen sind, durch den Kupplungsvorgang sichergestellt ist.

10) Anordnung nach einem oder mehreren der vorangehenden Ansprüche, dadurch gekennzeichnet, daß der Tonträger als ortsfeste Platte oder als ortsfester Streifen im Magazin untergebracht ist, und daß eine unmittelbar in Wirkverbindung mit dem Tonträger tretende Abtastkomponente des Aufzeichnungs- und Wiedergabegerätes in zwei zueinander senkrechten Koordinatenrichtungen relativ zu dem Tonträger beweglich ist, wobei eine Bewegungsrichtung der Aufzeichnung bzw. Wiedergabe, die andere dem Speicherwechsel zugeordnet ist.

- 2 -

11) Anordnung nach Anspruch 6 und 10, dadurch gekennzeichnet, daß das Magazin eine durch einen Deckel verschließbare Öffnung aufweist, durch die die Abtastkomponente in das Magazin einführbar ist.

12) Anordnung nach einem der Ansprüche 1 bis 9, dadurch gekennzeichnet, daß der Tonträger als umlaufendes Band, als umlaufende Manschette, Walze oder Scheibe ausgebildet ist.

13) Anordnung nach Anspruch 12, dadurch gekennzeichnet, daß eine Abtastkomponente des Aufzeichnungs- und Wiedergabegerätes quer zur Umlaufrichtung des Tonträgers beweglich ist.

14) Anordnung nach Anspruch 13, dadurch gekennzeichnet, daß für Aufzeichnung bzw. Wiedergabe die Umlaufbewegung des Tonträgers und für den Speicherwechsel die relative Querbewegung der Abtastkomponente vorgesehen sind.

15) Anordnung nach Anspruch 13, dadurch gekennzeichnet, daß für die Aufzeichnung bzw. Wiedergabe die relative Querbewegung der Abtastkomponente und für den Speicherwechsel die Umlaufbewegung des Tonträgers vorgesehen sind.

16) Anordnung nach Anspruch 14, dadurch gekennzeichnet, daß eine wiederholte Wiedergabe einer Tonaufzeichnung bei kontinuierlichem Umlauf des Tonträgers vorgesehen ist, auf dem die Speicher in sich geschlossene Spuren bilden.

17) Anordnung nach Anspruch 14 oder 16, dadurch gekennzeichnet, daß für die relative Querbewegung der Abtastkomponente diese selbst relativ zum gesamten Magazin beweglich ist.

18) Anordnung nach einem der Ansprüche 10 bis 16, dadurch gekennzeichnet, daß der Speicherwechsel durch die Schieberbetätigung unmittelbar mechanisch betätigbar ist.

19) Anordnung nach einem oder mehreren der vorangehenden Ansprüche, dadurch gekennzeichnet, daß das Magazin eine Einrichtung aufweist, mittels der die Zahl der zyklisch anwählbaren Tonspeicher in Anpassung an die Zahl der in dem Magazin untergebrachten Karten einstellbar ist.

20) Anordnung nach einem der Ansprüche 10 bis 19, dadurch gekennzeichnet, daß die Tonspeicher auf dem Tonträger nebeneinander angeordnet sind und die Abtastkomponente des Aufzeichnungs- und Wiedergabegerätes vom letzten Speicher auf den ersten rückstellbar ist.

21) Anordnung nach Anspruch 5 oder 6, dadurch gekennzeichnet, daß das Zusatzteil mit einer optischen Projektionseinrichtung für das jeweils im Sichtfenster präsentierte Bild ausgestattet ist.

22) Anordnung nach einem oder mehreren der vorangehenden Ansprüche, vorzugsweise nach Anspruch 21, dadurch gekennzeichnet, daß das Aufzeichnungs- und Wiedergabegerät mit einem motorischen Antrieb für die Betätigung des Wechselschiebers ausgestattet ist.

23) Anordnung nach Anspruch 22, dadurch gekennzeichnet, daß der motorische Antrieb fernsteuerbar ist.

24) Anordnung nach Anspruch 21 und 22 oder 21 und 23, dadurch gekennzeichnet, daß bei der Tonaufzeichnung ein Steuersignal mit aufgezeichnet ist für die Auslösung des Wechselschiebermotors in Abhängigkeit von der Wiedergabedauer der Tonaufzeichnung.

25) Anordnung nach Anspruch 24, dadurch gekennzeichnet, daß das Steuersignal ein akustisches Signal im unhörbaren Frequenzbereich ist.

26) Anordnung nach einem oder mehreren der vorangehenden Ansprüche, bei dem für die Tonaufzeichnung und -wiedergabe das Magnetbandsystem vorgesehen ist, dadurch gekennzeichnet, daß im Magazin eine Abstützung für den Tonträger und im Aufzeichnungs- und Wiedergabegerät eine Abstützung für den Tonkopf vorgesehen sind, von denen mindestens eine elastisch vorgespannt ist.

27) Anordnung nach Anspruch 26, dadurch gekennzeichnet, daß die elastische Vorspannung während des Speicherwechsels inaktivierbar ist.

28) Anordnung nach Anspruch 26 oder 27, dadurch gekennzeichnet, daß die elastische Vorspannung während der Schieberwechselbewegung inaktivierbar ist.

29) Anordnung nach Anspruch 26, dadurch gekennzeichnet, daß in konventioneller Weise die relative Abtastbewegung zwischen Tonkopf und Magnetspur und die relative Tonspurwechselbewegung durch einen oder zwei elektromotorische Antriebe erfolgt.

30) Anordnung nach Anspruch 26, dadurch gekennzeichnt, daß die Energie für die Abtastbewegung des Tonkopfes und/oder die Tonspurwechselbewegung des Tonkopfes und/oder die Rückstellbewegung des Tonkopfes an den Spuranfang und/oder die Rückstellbewegung des Tonkopfes auf die erste Spur des Tonträgers eine mechanischen Energiespeicher entnommen w ird, der durch die Wechselschieberbewegung aufladbar ist.

31) Anordnung nach Anspruch 30, dadurch gekennzeichnet, daß der mechanische Energiespeicher ein Federwerk mit Ablaufhemmwerk umfaßt.

32) Anordnung nach Anspruch 30 oder 31, dadurch gekennzeichnet, daß der mechanische Energiespeicher durch eine einzige Wechselschieberbetätigung mit einer führ mehrere Tonwiedergabevorgänge ausreichenden Energie aufladbar ist.

33) Anordnung nach Anspruch 31 oder 32, dadurch gekennzeichnet, daß der mechanische Energiespeicher durch eine Teilbewegung des Wechselschiebers, bei der kein Kartenwechsel erfolgt, nachladbar ist.

34) Anordnung nach einem oder mehreren der vorangehenden Ansprüche, bei der für die Tonaufzeichnung und -wiedergabe eine Relativbewegung zwischen dem Tonträger und einer Abtastkomponente erforderlich ist, vorzugsweise nach Anspruch 26, dadurch gekennzeichnet, daß mehrere vorgegebene Geschwindigkeiten der Relativbewegung einstellbar sind.

35) Anordnung nach einem oder mehreren der vorangehenden Ansprüche, dadurch gekennzeichnet, daß die Anordnung eine Anzeigeeinheit für die bei jeder präsentierten Karte verbrauchte bzw. noch zur Verfügung stehende Tonaufzeichnungskapazität bzw. -wiedergabedauer aufweist.

36) Anordnung nach Anspruch 6 und 30 oder 7 und 30, dadurch gekennzeichnet, daß der mechanische Energiespeicher in dem Zusatzteil untergebracht ist und die Bewegung des Wechselschiebers durch mechanische Getriebeelemente in das Zusatzteil übertragen wird.

37) Anordnung nach Anspruch 36, gekennzeichnet durch eine am Wechselschieber angeordnete Zahnstange, die mit einem Zahnrad kämmt, das im Magazin oder im Zusatzteil angeordnet ist und von dem aus der mechanische Energiespeicher aufgeladen wird.

38) Anordnung nach Anspruch 5 und 26, dadurch gekennzeichnet, daß der Tonkopf im Magazin beweglich geführt ist und über Schleifkontakte mit ortsfesten Klemmen für die elektrischen Aufzeichnungs- oder Wiedergabesignale verbunden ist.

39) Anordnung nach Anspruch 38, dadurch gekennzeichnet, daß die Klemmen zur Außenseite des Magazins geführt und mit Anschlüssen im Zusatzteil lösbar verbunden sind.

40) Anordnung nach Anspruch 39, 12, 13 und 18, dadurch gekennzeichnet, daß das Magazin eine den Umlauf des Tonträgers bewirkende Welle mit einem von der Außenseite des Magazins her zugänglichen Kupplungsstück zur Verbindung mit einem im Zusatzteil untergebrachten Antriebsmotor aufweist, und daß die Verbindung der Klemmen mit den Anschlüssen sowie die Kupplung der Welle mit dem Antriebsmotor durch das Aufsetzen, Einschieben oder sonstiges Verbinden des Magazins mit dem Zusatzteil herstellbar bzw. lösbar sind.

41) Anordnung nach Anspruch 40, dadurch gekennzeichnet, daß der Tonkopf mechanische Steuermittel umfaßt für die Auslösung der Rückstellbewegung, und daß am Magazin ortsfeste Steuermittel zum Bewegen des Tonkopfes in der dritten Koordinatenrichtung zwecks Mitnahme durch den Schieber vorgesehen sind.

42) Anordnung nach Anspruch 1, dadurch gekennzeichnet, daß jede Karte mit einem Tonträgerspeicher versehen ist und die Tonaufzeichnung auf einer Karte der Bildinformation auf einer anderen Karte zugeordnet ist, wobei die Koordinierung bei Aufnahme und Wiedergabe der Toninformation durch die Reihenfolge der Karten im Magazin gegeben ist.

43) Anordnung nach Anspruch 42, dadurch gekennzeichnet, daß der jeweils im Sichtfenster präsentierten Karte der Tonträgerspeicher auf der dem Sichtfenster abgewandten Seite des Stapels liegenden Karte zugeordnet ist.

44) Anordnung nach Anspruch 5 oder 6, dadurch gekennzeichnet, daß d as Magazin durch seitliches Aufschieben längs an seiner dem Sichtfenster abgewandten Seite angeordneten Führungsschienen mit dem Zusatztteil kuppelbar ist.

45) Anordnung nach Anspruch 11 und 44, dadurch gekennzeichnet, daß durch das Aufschieben der Deckel automatisch geöffnet und durch das Lösen des Magazins vom Zusatzteil vorzugsweise automatisch wieder geschlossen wird.

Fig.1

Fig.2

Fig.3

Fig.4

Fig.5

Fig.6

0139778

2/2

0139778

Fig.7

Fig.8

Fig.9

Fig.10

Europäisches
Patentamt

**EUROPÄISCHER RECHERCHENBERICHT**

Nummer der Anmeldung

EP 83 11 0771

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | DE-A-2 352 001 (PRONTOR-WERK ALFRED GAUTHIER GmbH)<br><br>* Figuren 1-13; Seite 28, Ansprüche 1-3; Seite 29, Anspruch 7; Seite 31, Anspruch 17 *<br><br>--- | 1,2,4, 7,9-12 ,16,18 -20,29 ,42 | G 09 B 5/06<br>G 03 B 23/14 |
| Y | US-A-3 704 337 (INFORMATION TRANSFER CORP.)<br><br>* Figuren 1,3,4,7-9; Spalte 3, Zeilen 20-68; Spalte 5, Zeilen 24-31, 55-68; Spalte 6; Spalte 7, Zeilen 1-43; Spalte 12, Zeilen 34-41; Spalte 14, Zeilen 13-35 *<br><br>--- | 1,2,5- 7,9,16 ,18-20 ,22,24 ,29,42 -45 | |
| A | US-A-3 563 644 (THE KALART CO., INC.)<br><br>* Figuren 1,4c; Spalte 2, Zeilen 55-72; Spalte 3, Zeilen 1-43; Spalte 5, Zeilen 6-31; Spalte 14, Zeilen 62-75; Spalte 15, Zeilen 1-48, 67-75 *<br><br>---     -/- | 1,2,5- 7,9,10 ,12,16 ,18,19 ,21-24 ,29 | RECHERCHIERTE SACHGEBIETE (Int. Cl. 3)<br><br>G 09 B<br>G 06 K<br>G 03 B |

Der vorliegende Recherchenbericht wurde für alle Patentansprüche erstellt.

| Recherchenort | Abschlußdatum der Recherche | Prüfer |
|---|---|---|
| DEN HAAG | 25-06-1984 | ALLEN E.F. |

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | US-A-4 245 417 (LICINVEST AG)<br>* Figuren 1-18; Spalte 5, Zeilen 44-68; Spalte 6, Zeilen 1-8, 62-68; Spalte 7, Zeilen 1-12 * | 1,3 | |
| A | US-A-4 072 989 (MINNESOTA MINING AND MANUFACTURING CO.)<br>* Zusammenfassung * | 1,2,5, 23 | |
| A | US-A-3 883 238 (DIMITRACOPOULOS)<br>* Spalte 10, Zeilen 41-55 * | 25,42 | |
| A | US-A-3 997 917 (SONY CORP.)<br><br>* Figuren 1-4; Spalte 4, Zeilen 1-42 * | 30-33, 36 | |
| A,D | DE-A-2 219 865 (STAAR DEVELOPMENT CO.) | | RECHERCHIERTE SACHGEBIETE (Int. Cl. 3) |
| A | US-A-3 296 925 (MATSUSHITA ELECTRICAL) | | |

Der vorliegende Recherchenbericht wurde für alle Patentansprüche erstellt.

| Recherchenort | Abschlußdatum der Recherche | Prüfer |
|---|---|---|
| DEN HAAG | 25-06-1984 | ALLEN E.F. |